# EUROPEAN PATENT APPLICATION

(11) **EP 4 550 530 A1**
(43) Date of publication of application: **07.05.2025**
(21) Application number: 23907711.8
(22) Date of filing: 20.12.2023
(51) Int. Cl.: H01M 10/6567, H01M 10/613, H01M 50/553, H01M 50/567, H01M 50/562, H01M 50/227, H01M 50/502, H01M 50/264, H01M 50/204

(54) **BATTERY MODULE AND BATTERY PACK COMPRISING SAME**

(30) Priority: 22.12.2022 KR 20220181906; 19.12.2023 KR 20230185439
(71) Applicant: LG Energy Solution, Ltd., Seoul 07335 (KR)
(72) Inventor: HWANG, Taewon, Daejeon 34122 (KR); YUN, Hyeonki, Daejeon 34122 (KR); JU, Eunah, Daejeon 34122 (KR); TANNENBERGER, Günter, 85123 Pobenhausen (DE); HARASZTOSI, Uwe, 74172 Neckarsulm (DE); WASSERMANN, Thomas, 74321 Bietigheim-Bissingen (DE)
(74) Representative: Plasseraud IP
(86) International application number: PCT/KR2023/021049
(87) International publication number: WO 2024/136428

(57) **Abstract**

A battery module according to an embodiment of the present disclosure comprises a first sub-module and a second sub-module which each include a battery cell assembly in which a plurality of battery cells are stacked, and a busbar electrically connecting the battery cells and a busbar frame covering the battery cell assembly on at least one side, a module housing that simultaneously houses the first sub-module and the second sub-module, and a terminal assembly located at a portion overlapping with an area between the first sub-module and the second sub-module, wherein an opening is formed in a part of the module housing, and the terminal assembly is connected to the terminal busbar of each of the first sub-module and the second sub-module through the opening.

## Description

### [TECHNICAL FIELD]

### Cross Citation with Related Application(s)

This application claims the benefit of Korean Patent Application No. 10-2022-0181906 filed on December 22, 2022 and Korean Patent Application No. 10-2023-0185439 filed on December 19, 2023 in the Korean Intellectual Property Office, the disclosures of which are incorporated herein by reference in their entirety.

The present disclosure relates to a battery module and a battery pack including the same, and more specifically, to a battery module having a cooling structure that utilizes an insulating oil and a battery pack including the same.

### [BACKGROUND]

As the technology development of and the demand for mobile devices have increased, the demand for secondary batteries as energy sources has rapidly increased. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Meanwhile, when a plurality of battery cells are connected in series or in parallel to configure a battery module and/or a battery pack, it is common to configure a battery module composed of at least one battery cell first and then configure a battery pack by using at least one battery module and adding other components.

Since battery cells constituting such a medium- or large-sized battery module are composed of secondary batteries which can be charged and discharged, such a high-output large-capacity secondary battery generates a large amount of heat during a charging and discharging process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

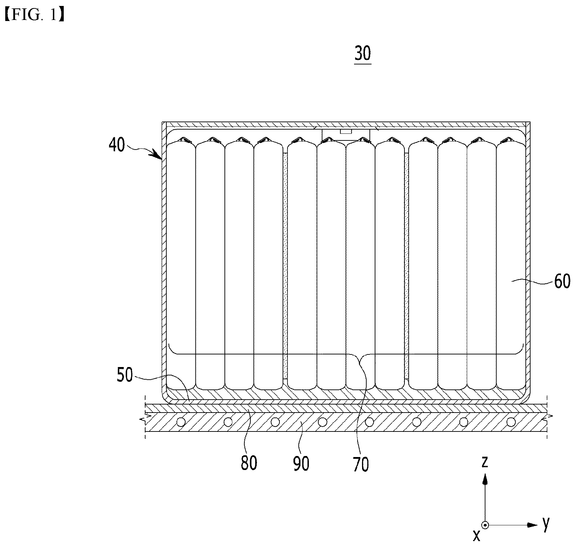

FIG. 1 is a diagram showing a heat discharge path in a conventional battery module.

Referring to FIG. 1, a conventional battery module 30 includes a cell assembly 70 including battery cells 60 stacked in a preset direction, and a module frame 40 that houses the cell assembly 70, wherein the cell assembly 70 is fixedly located on the thermally conductive resin layer 50 located on a lower surface of a module frame 40. In this case, in order to cool down the heat generated in the cell assembly 70, a heat sink 90 facing the bottom of the module frame 40 located in the -z axis direction of FIG. 1 is provided, and a heat conduction pad 80 for heat transfer may be further installed between the heat sink 90 and the bottom of the module frame 40.

However, since the heat sink 90 does not receive transfer of heat while being in direct contact with the cell assembly 70, the cooling efficiency is not very high, the cooling path is formed in one direction of the width direction of the battery cell (-z-axis direction), so that a temperature gradient may occur.

Therefore, in order to extend the life of the battery module and/or the battery pack, it is necessary to improve the cooling efficiency of the battery module/battery pack so that the temperature of the battery cell does not increase.

### [DETAILED DESCRIPTION OF THE INVENTION]

### [Technical Problem]

It is an object of the present disclosure to provide a battery module that directly cools the battery cells and thus maximizes the cooling performance, and a battery pack including the same.

It is another object of the present disclosure to provide a battery module that integrates the structures of the battery module and battery pack, applies a highly stiff housing to ensure sealing reliability and maximize energy density, and a battery pack including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery module comprising: a first sub-module and a second sub-module which each include a battery cell assembly in which a plurality of battery cells are stacked, and a busbar electrically connecting the battery cells and a busbar frame covering the battery cell assembly on at least one side, a module housing that simultaneously houses the first sub-module and the second sub-module, and a terminal assembly located at a portion overlapping with an area between the first sub-module and the second sub-module, wherein an opening is formed in a part of the module housing, and the terminal assembly is connected to the terminal busbar of each of the first sub-module and the second sub-module through the opening.

The battery module may further comprise a bracket located in the opening, and a sealing member formed between the bracket and the terminal assembly.

The terminal assembly may comprise a connecting cable having flexible properties, a terminal housing coupled to the connecting cable, and an upper cap that covers the upper part of the terminal housing connected to the bracket.

The module housing is formed of a highly stiff material, and the highly stiff material may include fiber reinforced plastic (FRP) as a composite material.

The battery module may further comprise a flange part formed on a side surface of the module housing, and a module fastening member coupled to the flange part.

According to one embodiment of the present disclosure, there is provided a battery pack comprising: a plurality of the battery modules, wherein the first battery module and the second battery module included in the plurality of the battery modules are adjacent to each other, wherein the first battery module and the second battery module are electrically connected by a first terminal assembly and a second terminal assembly, and wherein the first terminal assembly and the second terminal assembly are connected to each other by a fixing member.
the respective flange parts of the first battery module and the second battery module overlap each other, and the first battery module and the second battery module may be coupled by a module fastening member that passes through the overlapping flange part.

The coupling part including the module fastening member may form a stiff beam of the battery pack.

The fixing member may be fastened to the module housing by a fastening member.

The battery pack further comprises a pack frame that surrounds the plurality of battery modules from front, rear, left, and right sides, respectively, wherein the pack frame may be divided into in plural numbers so that the plurality of battery modules correspond to the front, rear, left, and right sides, respectively.

The battery pack further comprises a frame fastening part formed on a side surface of the module housing, wherein at least one of the pack frames may be connected to the battery module by inserting a frame fastening member into the frame fastening part.

A mounting hole is formed in at least one of the pack frames, the mounting hole is arranged so as to correspond to the hole formed in the mounting part of the end plate of the battery module, and the frame fastening member may be inserted into the mounting hole and the hole formed in the mounting part.

The overall structure of the pack frame may have a shape that exposes an upper part and a lower part of the battery module.

The upper part and the lower part of the battery module formed of a highly stiff material may form an upper cover and a lower cover of the pack frame.

The first terminal assembly and the second terminal assembly may connect terminal busbars having different polarities from each other, respectively.

### [Advantageous Effects]

According to embodiments, the cooling performance of the battery module can be maximized by directly cooling the battery cells through circulation of an insulating oil.

Also, the sealing reliability can be secured by applying a highly stiff housing.

In addition, the energy density can be maximized by integrating the structures of the battery module and the battery pack.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a diagram showing a heat discharge path in a conventional battery module.
FIG. 2 is a perspective view showing a battery module according to an embodiment of the present disclosure.
FIG. 3 is an exploded perspective view of the battery module of FIG. 2.
FIG. 4 is a perspective view showing a state in which the terminal assembly is connected to the battery module of FIG. 2.
FIG. 5 is a diagram showing a terminal assembly included in the battery module of FIG. 4.
FIG. 6 is an exploded perspective view showing a cell assembly included in the battery module of FIG. 4.
FIG. 7 is a perspective view showing a state before the busbar frame is coupled to the cell assembly of FIG. 6.
FIG. 8 is a perspective view showing the coupling between a busbar bolt and a busbar nut according to an embodiment of the present disclosure.
FIG. 9 is a perspective view showing a battery pack formed by connecting a plurality of battery modules of FIG. 4.
FIG. 10 is a front view of a state in which adjacent battery modules are coupled together.
FIG. 11 is a perspective view showing the coupling between a battery module and a cooling assembly according to an embodiment of the present disclosure.
FIG. 12 is a diagram showing a front surface or a rear surface of a battery module according to an embodiment of the present disclosure.
FIGS. 13 and 14 are front views showing the coupling of the cooling assembly in the battery pack according to an embodiment of the present disclosure.
FIG. 15 is a schematic diagram showing the connecting relationship of the cooling assembly in the battery pack according to a comparative example.
FIG. 16 is a schematic diagram showing the connecting relationship of the cooling assembly in the battery pack according to an embodiment of the present disclosure.
FIGS. 17 and 18 are diagrams showing the coupling of a battery module and a pack frame according to an embodiment of the present disclosure.
FIG. 19 is a plan view showing a structure in which terminal assemblies are connected in a battery pack according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

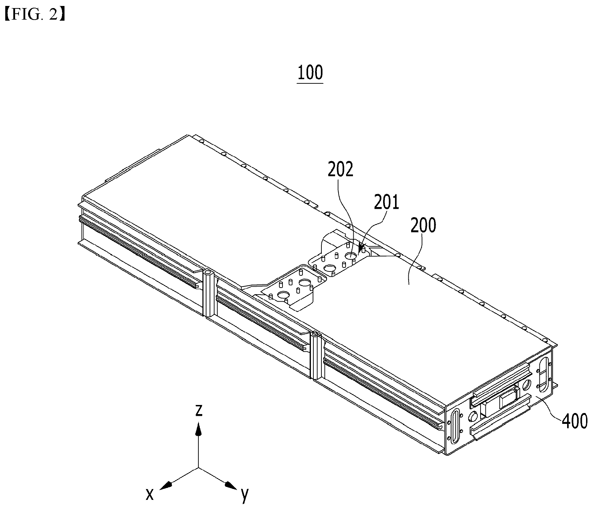

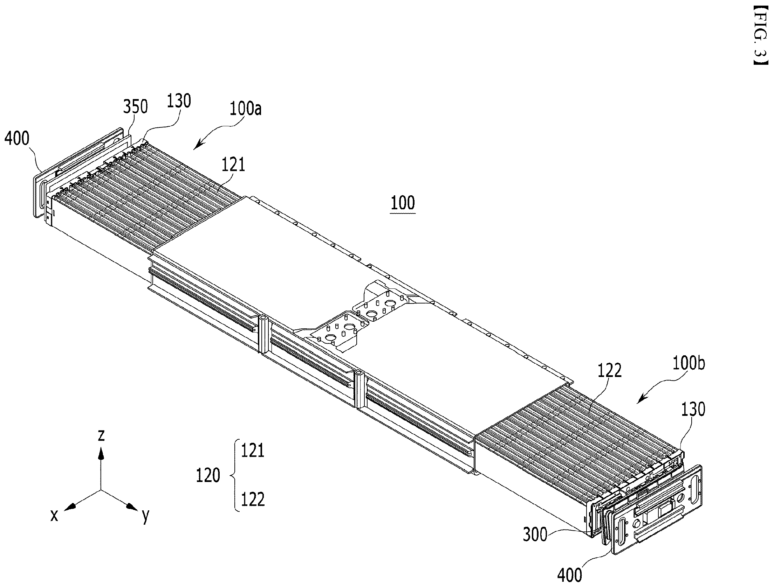

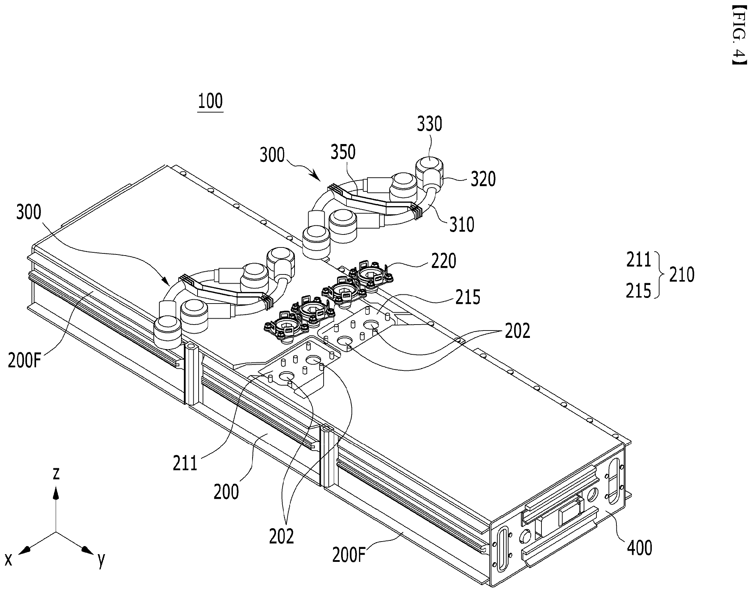

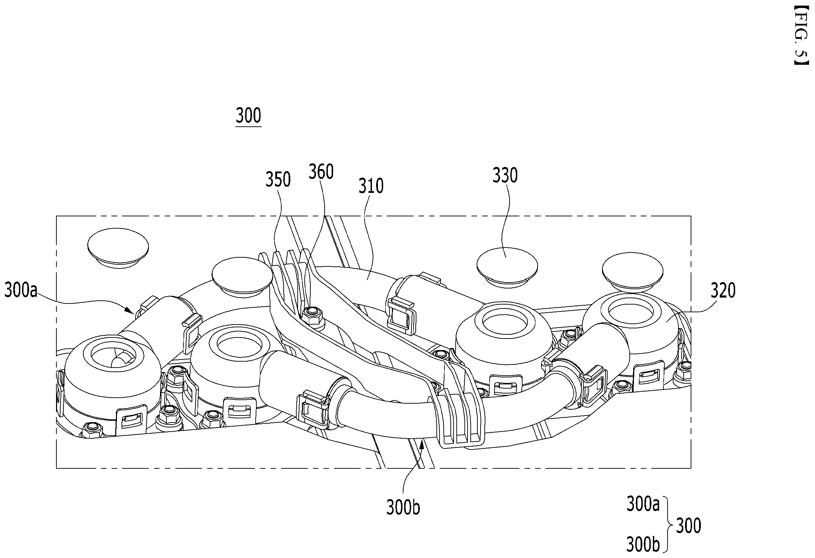

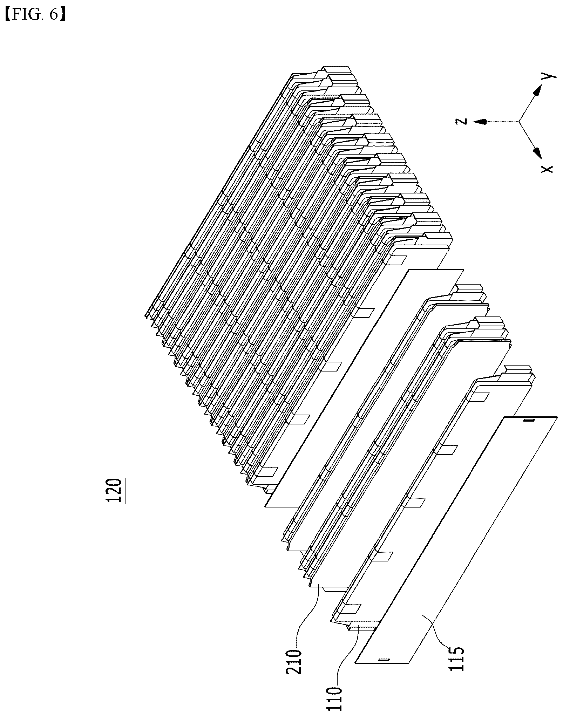

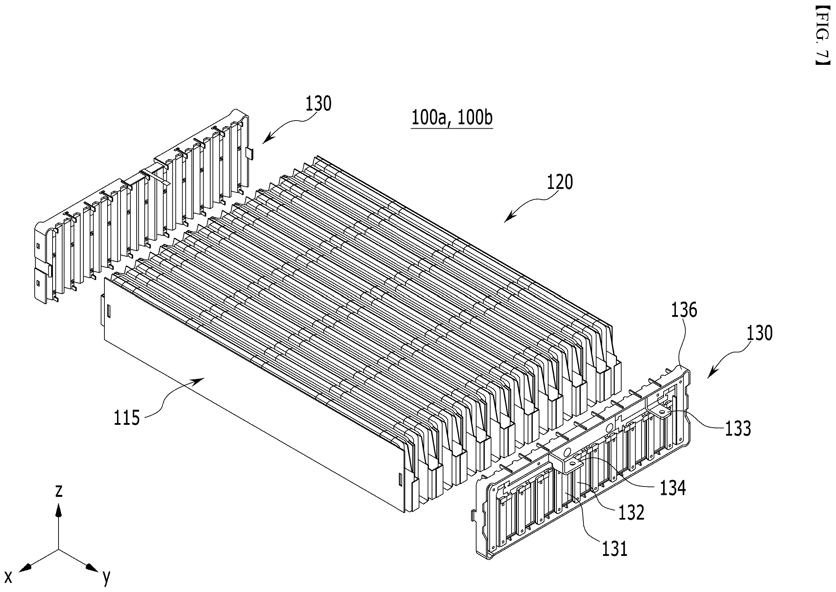

FIG. 2 is a perspective view showing a battery module according to an embodiment of the present disclosure. FIG. 3 is an exploded perspective view of the battery module of FIG. 2. FIG. 4 is a perspective view showing a state in which the terminal assembly is connected to the battery module of FIG. 2. FIG. 5 is a diagram showing a terminal assembly included in the battery module of FIG. 4. FIG. 6 is an exploded perspective view showing a cell assembly included in the battery module of FIG. 4. FIG. 7 is a perspective view showing a state before the busbar frame is coupled to the cell assembly of FIG. 6.

Referring to Figures 2, 3, 6, and 7, a battery module 100 according to the present embodiment comprises a first sub-module 100a and a second sub-module 100b which each include a battery cell assembly 120 in which a plurality of battery cells 110 are stacked, and a busbar electrically connecting the battery cells 110 and a busbar frame 130 covering the battery cell assembly 120 on at least one side, and a module housing 200 that simultaneously houses the first sub-module 100a and the second sub-module 100b.

The battery cells provided in the cell assembly 120 may be of a pouch shape that can maximize the number of cells stacked per unit area. The battery cell provided in the pouch shape can be manufactured by housing an electrode assembly including a positive electrode, a negative electrode, and a separator in a cell case of a laminate sheet and then heat-sealing the sealing part of the cell case. However, the battery cell need not be essentially provided in a pouch shape, and can be provided in a prismatic, cylindrical, or various other forms, at a level where the storage capacity required by the device to be mounted in the future is achieved.

Meanwhile, the battery cell provided in the pouch shape may have a length, a width and a thickness, and the longitudinal direction, the width direction, and the thickness direction of the battery cell may be a direction perpendicular to each other. For example, as shown in FIGS. 2, 6 and 7, the longitudinal direction of the battery cell may be defined as a y-axis direction, the width direction as a z-axis direction, and the thickness direction as an x-axis direction. Thereby, the longitudinal direction of the cell assembly 120 may be defined as the y-axis, and the stacking direction of the battery cells in the cell assembly 120 (hereinafter referred to as the stacking direction) may be defined as an x-axis direction.

In FIG. 6, cooling fins 210 may be arranged between adjacent battery cells 110, wherein the cooling fins 210 may be cooled by receiving transfer of heat generated from the battery cell 110 and contacting with an insulating oil. Further, an insulating plate 115 may be formed on the outermost side of the cell assembly 120.

In FIG. 7, respective battery cells of the cell assembly 120 may include electrode leads protruded from both sides in the longitudinal direction (y-axis direction). One end of the electrode lead is located inside the battery cell and thus is electrically connected to a positive electrode or a negative electrode of the electrode assembly in the battery cell, and the other end of the electrode lead protrudes to the outside of the battery cell, and thus may be electrically connected to a busbar mounted on the busbar frame 130.

The busbar frame 130 is located on one surface of the cell assembly 120, and thus may be provided to cover one surface of the cell assembly 120 and simultaneously guide the connection between the cell assembly 120 and external devices. The busbar frame 130 may be coupled to a front surface or a rear surface of the cell assembly 120 in a state in which the outermost surface of the cell assembly 120 is pressed by the insulating plate 115. The busbar frame 130 may be provided on a front surface and a rear surface of the cell assembly 120, respectively. Wherein, the front surface or the rear surface may be a surface on which the electrode leads of respective battery cells in the cell assembly 120 are located.

The busbar frame 130 may include a slit 131 into which the electrode leads of the battery cells can be inserted. The electrode lead having passed through the slit 131 may be connected to the busbar 132 mounted on one surface of the busbar frame 130. The electrode lead of each battery cell is connected to the busbar 132, so that a plurality of battery cells of the cell assembly 120 may be electrically connected to each other. Further, the slit 131 may function as a passage through which a coolant flows into the inside of the battery module 100. Since the coolant in this embodiment is injected through the end plate 400, the injected coolant may pass through the slit 131 of the busbar frame 130 and come into contact with the battery cells. Further, the coolant that has come into contact with the battery cells may pass through the slit 131 and be discharged to the outside of the battery module 100.

The busbar frame 130 may be manufactured from an electrically insulating material. The busbar frame 130 includes an insulating material, thereby being able to restrict the busbar 132 from contacting with other parts of the battery cell in addition to the electrode leads, and to prevent electrical short circuits from occurring.

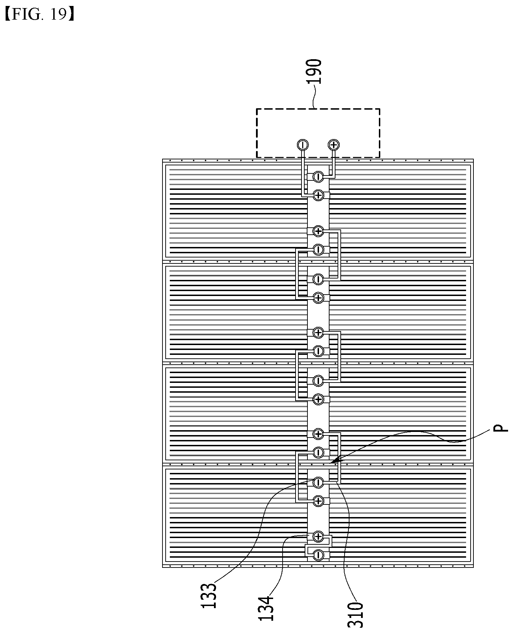

The busbar frame 130 may be mounted with terminal busbars 133 and 134 that provide electrical connections between the cell assembly 120 and external devices. The terminal busbars 133 and 134 are high potential terminals, and may be connected to the HV connection assembly 500 (see FIG. 19) that electrically connects the two battery modules 100. Wherein, the terminal busbars 133 and 134 may include a first terminal busbar 133 and a second terminal busbar 134, each of which may have different polarities from each other.

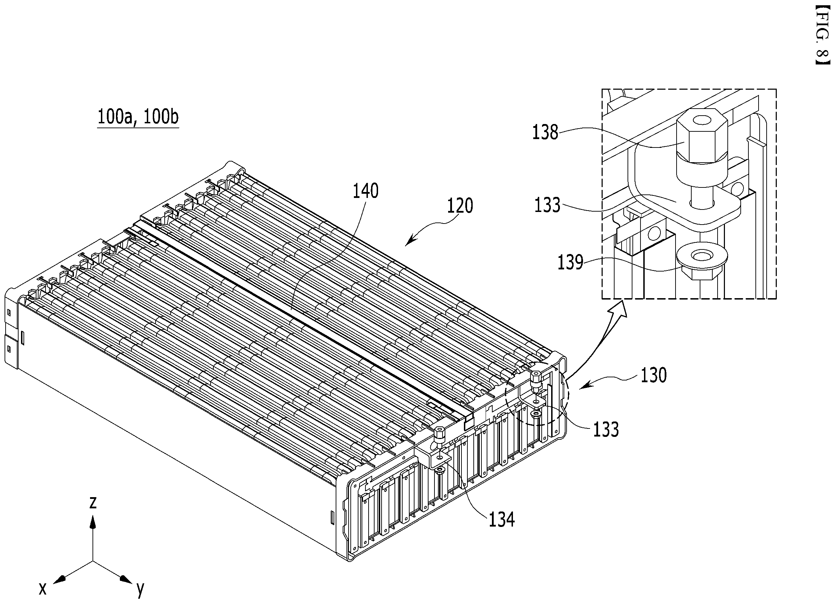

FIG. 8 is a perspective view showing the coupling between a busbar bolt and a busbar nut according to an embodiment of the present disclosure.

Referring to FIG. 8, the first terminal busbar 133 may be connected to a busbar bolt 138 and a busbar nut 139. As will be described later, the busbar bolt 138 and the busbar nut 139 may be for facilitating the connection between the first terminal busbar 133 and the terminal assembly 300. The first terminal busbar 133 is arranged so that one end protrudes along the longitudinal direction of the battery cell, and the protruded one end may have a surface parallel to the ground (xy plane). A hole into which the busbar bolt 138 can be inserted is formed on the above-mentioned one surface of the first terminal busbar 133, and the busbar bolt 138 that has passed through the hole on one side of the first terminal busbar 133 may be coupled to the busbar nut 139 located on the other side. Wherein, although the drawing shows that the busbar bolt 138 is inserted from the upper side to the lower side, but this is not always the case, and a case where the busbar bolts 138 are inserted from the lower side to the upper side may also be included in the present embodiment.

Meanwhile, although the first terminal busbar 133 is mainly described above, the above description can also be applied to the second terminal busbar 134. For example, the second terminal busbar 134 mounted on the busbar frame 130 may have one surface parallel to the ground. In addition, the second terminal busbar 134 may be provided with a busbar bolt 138 that passes through the hole formed on one surface described above and a busbar nut 139 coupled to the busbar bolt 138.

Referring to FIG. 8, a sensing unit 140 may be located on one surface of the busbar frame 130. The sensing unit 140 is provided to implement low-voltage (LV) connection, wherein the LV connection may mean a sensing connection for detecting and controlling the voltage of a battery cell. The sensing unit 140 may include a sensing terminal that detects the voltage value of the busbar 132, a temperature sensor that detects the temperature inside the battery module 100, and a connection member that connects them. For example, the sensing unit 140 may include a PCB (printed circuit board) and/or a FFC (flexible flat cable). Alternatively, the sensing unit 140 may include a flexible printed circuit board(FPCB).

Referring again to FIG. 2, the module housing 200 according to the present embodiment may be for protecting the cell assembly 120 and the electrical components connected thereto from external physical impacts. The module housing 200 can house the cell assembly 120 and electrical components connected thereto in its internal space.

The module housing 200 may be provided with various structures. For example, the module housing 200 may be in a metal plate shape in which the upper surface, the lower surface and both side surfaces are integrated. Wherein, the module housing can be manufactured by extrusion molding. Unlike the same, however, the module housing 200 may be provided in the form of a U-shaped frame and plate in which one of the upper and lower surfaces and both side surfaces are coupled, and may also be provided as two L-shaped frames in which one of the upper and lower surfaces and one side surface are coupled. At this time, each frame or plate can be manufactured by press molding.

Respective components of the module housing 200 may be coupled by welding or the like in a state where corresponding corners are in contact with each other, or may be fixed to each other through separate fastening members. Further, respective components of the module housing 200 may be made of a metal material having a predetermined strength.

The module housing 200 may be provided in an opened shape along the longitudinal direction (y-axis direction) of the cell assembly 120, and the module housing 200 may house the cell assembly 120 and then be coupled to the end plates 400 provided on the front and rear surfaces of the cell assembly 120.

The battery module 100 according to the present embodiment may have a twin structure. Herein, the twin structure may be a structure in which the battery module 100 includes two cell assemblies 120. In the twin structure, two cell assemblies 120 housed in one module housing 200 may be arranged along the longitudinal direction (y-axis direction). Further, the two cell assemblies 120 housed in one module housing 200 may be arranged such that the front or rear surfaces of the cell assemblies where the electrode leads are located face each other.

Specifically, referring to FIG. 3, the battery module 100 according to the present embodiment includes a first cell assembly 121 and a second cell assembly 122. As shown in FIGS. 2 and 3, since the cell assembly 120 is inserted into the module housing 200 along the longitudinal direction, one of the front surface and the rear surface of the first cell assembly 121 is located inside the module housing 200, and the other may be located on the outside of the module housing 200, that is, on the open surface. In the conventional structure, two end plates 400 are provided in each of the first cell assembly 121 and the second cell assembly 122, and each end plate 400 is formed with two openings for exposing the positive electrode and the negative electrode terminal busbars 133 and 134. However, in the structure of the present embodiment, one of the front and rear surfaces of the first cell assembly 121 and the second cell assembly 122 faces each other inside the module housing 200, and the other may be arranged at the outside. Therefore, the number of end plates 400 provided in the first cell assembly 121 and the second cell assembly 122 is reduced from 4 to 2, and thus, the number of openings formed in the end plate 400 may be reduced.

Meanwhile, referring to FIGS. 2, 3 and 7, in the twin-structured battery module 100 according to the present embodiment, since the terminal busbars 133 and 134 are located inside the module housing 200, as shown in FIGS. 2 and 3, the module housing 200 may be formed with a module terminal part 201 for connecting the terminal busbars 133 and 134 of FIG. 7 with an external device. The module terminal part 201 may be formed on the upper surface of the module housing 200.

The terminal assembly 300 of FIG. 5 may be mounted on the module terminal part 201, wherein the module terminal part 201 may have an inwardly recessed shape to facilitate installation of the terminal assembly 300. The module terminal part 201 may be formed in the central part of the module housing 200. Wherein, the central part may be a portion including the center based on the longitudinal direction (y-axis direction) of the battery module 100.

The module housing 200 may include two module terminal parts 201. Each module terminal part 201 may include two terminal holes 202 corresponding to the terminal busbars 133 and 134. At this time, one of the two terminal holes 202 is for connection with one of the positive electrode and the negative electrode of the first cell assembly 121, and the other may be for connection to one of the positive electrode and the negative electrode of the second cell assembly 122.

In the cell assembly 120 of the present embodiment, the terminal busbars 133 and 134 may be arranged so as to be biased to one side in the stacking direction. Thereby, the four terminal busbars 133 and 134 of the two cell assemblies 120 housed in the same module housing 200 may be arranged so as to cross each other along one direction. Therefore, one module terminal part 201 corresponds to all of two cell assemblies 120, and the two terminal holes 202 included in one module terminal part 201 may each correspond to one of the terminal busbars 133 and 134 included in the first cell assembly 121 and the second cell assembly 122. In this case, the terminal busbars 133 and 134 of the first cell assembly 121 and the second cell assembly 122, each corresponding to the two terminal holes 202 of one module terminal portion 201, may have different poles from each other.

More specifically, the negative electrode of the second cell assembly 122, the positive electrode of the first cell assembly 121, the positive electrode of the second cell assembly 122, and the negative electrode of the first cell assembly 121 may be arranged based on the stacking direction. In this manner, in the twin structure according to the present embodiment, the terminal busbars 133 and 134 of the two cell assemblies 120 may be arranged in the order of the negative electrode, the positive electrode, the positive electrode and the negative electrode. However, this is not always the case, and they may be arranged in the order of the positive electrode, the negative electrode, the negative electrode and the positive electrode, and may also be arranged in a different order depending on the design. In this regard, reference may be made to FIG. 19, which will be described later.

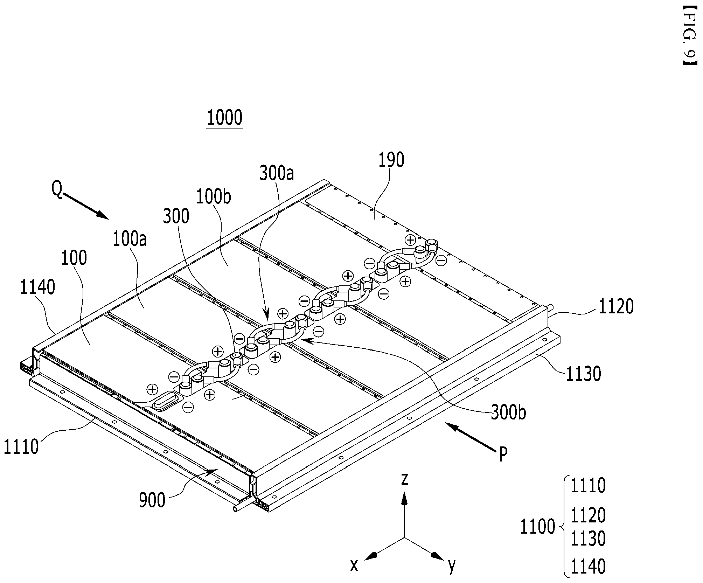

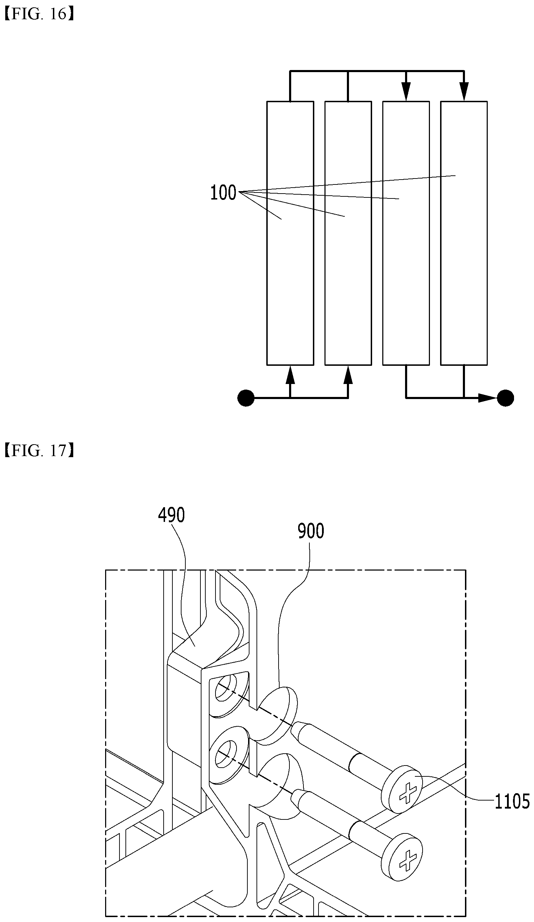

As shown in FIG. 8, the terminal busbars 133 and 134 are mounted with a busbar bolt 138, and the cell assembly 120 is inserted into the module housing 200, and then the busbar bolts 138 may be located so as to correspond to the terminal hole 202 of FIG. 2. The busbar bolt 138 is connected to the terminal assembly 300 located at the outside of the module housing 200 through the terminal hole 202, so that the cell assembly 120 may be electrically connected to an external device, for example, the cell assembly 120 of an adjacent battery module 100. Meanwhile, in the case of the battery module 100 located on the outermost side of the battery pack 1000 (see FIG. 9), two cell assemblies 120 included in one battery module 100 may be electrically connected by a terminal assembly 300 for HV connection. Further, the battery module 100 located on the outermost side may be electrically connected to a BDU 190 (see FIG. 17) through the terminal assembly 300.

Referring to FIGS. 2 to 5, the battery module 100 according to the present embodiment include a terminal assembly located at a portion overlapping with an area between the first sub-module 100a and the second sub-module 100b, and a portion overlapping with a module extension part located at a portion in which the first and second sub-modules 100a and 100b face each other. The terminal assembly 300 may be provide to implement an HV connection to the battery module 100. The terminal assembly 300 may be located on the module terminal part 201 of the module housing 200. The terminal assembly 300 is connected to the terminal busbars 133 and 134 within the module housing 200, and thus may be electrically connected to the cell assembly 120.

Referring to FIGS. 7 and 9, the terminal assembly 300 may electrically connect between adjacent battery modules 100. More specifically, the terminal assembly 300 is connected to the positive electrode of the terminal busbars 133 and 134 of one battery module 100, and may be connected to the negative electrode of the terminal busbars 133 and 134 of the battery module 100 adjacent to the battery module 100 described above. Further, the terminal assembly 300 may electrically connect the BDU 190 and the battery module 100 adjacent thereto. Further, depending on the location, the terminal assembly 300 may be provided so as to electrically connect the two cell assemblies 120 of the battery module 100 located on the outermost side.

Referring to FIGS. 3 to 5, the terminal assembly 300 according to the present embodiment may be connected to the terminal busbar of each of the first sub-module 100a and the second sub-module 100b through openings 211 and 215 formed in a part of the module housing 200 that overlaps with the module extension part. A bracket 220 may be located in the openings 211 and 215, and a sealing member may be formed between the bracket 220 and the terminal assembly 300. This sealing member can secure a sealing structure against an insulating oil for direct cooling of the module when forming an electrical connection structure through a structure in which the terminal assembly 300 is connected to the bracket 220.

In addition, the terminal assembly 300 according to the present embodiment includes a connecting cable 310 having flexible properties, a terminal housing 320 coupled with the connecting cable 310, and an upper cap 330 that covers the upper part of the terminal housing 320 connected to the bracket 220. Moreover, the terminal assembly 300 connecting terminal busbars having different polarities from each other may electrically connect adjacent first and second battery modules. At this time, the first battery module and the second battery module are electrically connected by the first terminal assembly 300a and the second terminal assembly 300b shown in FIG. 5, and the first terminal assembly 300a and the second terminal assembly 300b may be connected to each other by a fixing member 350.

The module housing 200 according to the present embodiment is formed of a highly stiff material, and the highly stiff material may include fiber reinforced plastic (FRP) as a composite material. Due to the high stiffness of the module housing 200, not only it control battery cells having high capacity and a high degree of swelling, but the module housing 200 itself also functions as a pack housing, a thereby being able to minimize the pack housing structure and ensure long-term reliability of sealing. Further, since the upper part of the module housing 200 functions as a pack cover, the upper housing may be omitted from the battery pack.

The module housing 200 according to the present embodiment includes at least two plates spaced apart from each other, and may form a space between these plates. Such a space may be a space in which a coolant flows.

According to the present embodiment, the coolant for cooling is a fluid, and the coolant may come into direct contact with the cell assembly 120, other electrical components, and the busbar frame 130 within the battery module 100. At this time, since the coolant must be electrically insulated, the coolant according to the present embodiment may be a material having insulating properties. As an example, the coolant may be an insulating oil.

As described above, the coolant may come into direct contact with the cell assembly 120, other electrical components, and the busbar frame 130 that generate heat within the battery module 100, thereby directly cooling them while receiving transfer of heat. Therefore, compared to a conventional method of indirectly cooling the battery module using a heat sink, or the like, the cooling efficiency can be improved, thereby extending the life of the battery.

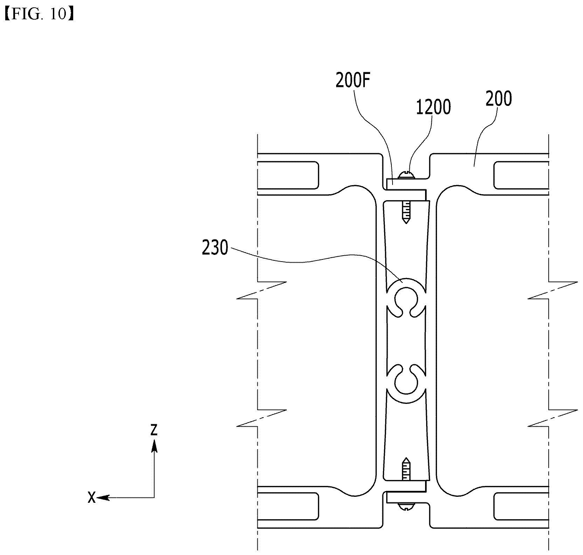

FIG. 9 is a perspective view showing a battery pack formed by connecting a plurality of battery modules of FIG. 4. FIG. 10 is a front view of a state in which adjacent battery modules are coupled together.

Referring to FIG. 9, the battery pack 1000 according to the present embodiment includes a plurality of battery modules 100, the first battery module and the second battery module included in the plurality of battery modules 100 are adjacent to each other, and the first battery module 100a and the second battery module 100b may be electrically connected by the first terminal assembly 300a and the second terminal assembly 300b.

Referring to FIG. 5, as previously described, the first terminal assembly 300a and the second terminal assembly 300b are connected to each other by a fixing member 350, and the fixing member 350 may be fastened to the module housing 200 by a fastening member 360.

Further, referring to FIGS. 4, 9, and 10, the battery modules 100 adjacent to each other may be coupled by module fastening members 1200 such as bolts, in a state in which flange parts 200F formed on the side surfaces of the module housings 200 overlap each other. At this time, the flange part 200F may be formed one by one on each of the upper side and the lower side of the side surface of the module housing 200. By such a coupling structure, the pack housing structure may be eliminated, the number of pack housing parts can be minimized, and particularly, the module fastening member 1200 can be coupled at the overlapping parts of the flange parts 200F formed on the upper and lower sides of the side surface of the flange part 200F, so that components such as stiff beams may be eliminated. In other words, the coupling part including the module fastening member 1200 at the overlapping part of the flange part 200F may function as a stiff beam in the pack structure. A plurality of module fastening members 1200 may be formed so as to be spaced apart from each other along the longitudinal direction (y-axis direction) of the battery module 100.

Further, the battery pack 1000 according to the present embodiment includes a pack frame 1100 that protects the plurality of battery modules 100 from external impacts. The pack frame 1100 may include a front frame 1110, a rear frame 1120, a first side frame 1130, and a second side frame 1140. Wherein, the front frame 1110 and the rear frame 1120 may extend along the longitudinal direction (y-axis direction) of the battery module 100, and the length of the front frame 1110 and the rear frame 1120 may be similar to the length of the battery module 100. The first side frame 1130 and the second side frame 1140 may extend along the width direction (x-axis direction) of the battery module 100. Further, the lengths of the first side frame 1130 and the second side frame 1140 may be proportional to the number of battery modules 100 included in the battery pack 1000.

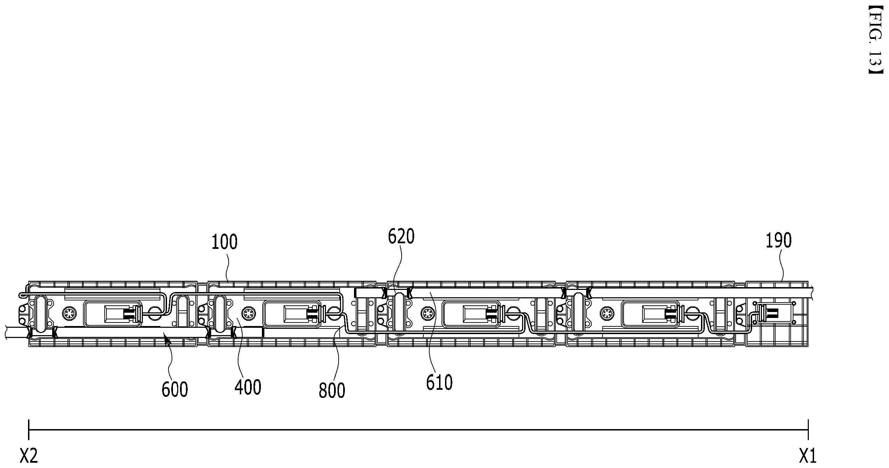

A plurality of battery modules 100 are aligned along one direction (x-axis direction), adjacent battery modules 100 are coupled to each other through the flange part 200F and the module fastening member 1200, and then the front frame 1110 can be coupled to the outermost battery module 100 through a separate fastening member. Further, the rear frame 1120 may be connected to one side of the BDU 190 with the outermost battery module 100 on the other side and then connected to the other side of the BDU through a separate fastening member. In addition, after the cooling assembly 600 and the LV cable 800 of FIG. 13 are mounted on a front surface or a rear surface of the plurality of battery modules 100, the first side frame 921 and the second side frame 922 may be coupled so as to cover the front surface or the rear surface of the plurality of battery modules 100.

The overall structure of the pack frame 1100 according to the present embodiment may have a shape that exposes an upper part and a lower part of the battery module 100. In other words, the pack frame 1100 may not separately include an upper cover that covers the upper part of the plurality of battery modules 100 and a lower cover that supports the lower part of the plurality of battery modules 100. At this time, the upper part and the lower part of the module housing formed of a highly stiff material may form an upper cover and a lower cover of the pack frame 1100.

Therefore, the pack frame 1100 of the present embodiment covers the front, and rear or left and right surfaces of the battery module assembly where the plurality of battery modules 100 are aligned for structural stability of the battery pack 1000, but unlike conventional battery packs, the frame structure provided on an upper surface or a lower surface can be eliminated, and thus provide the advantage of increasing energy density and space efficiency.

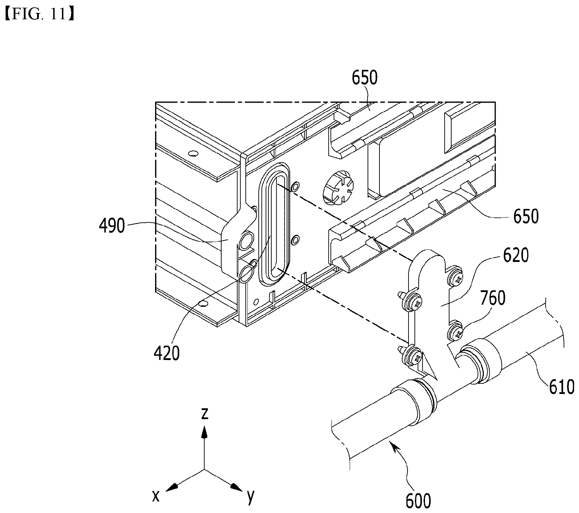

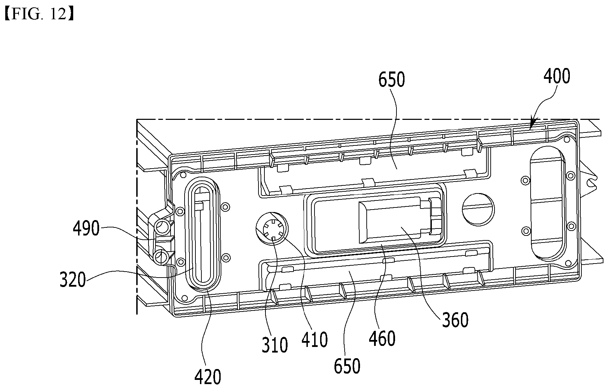

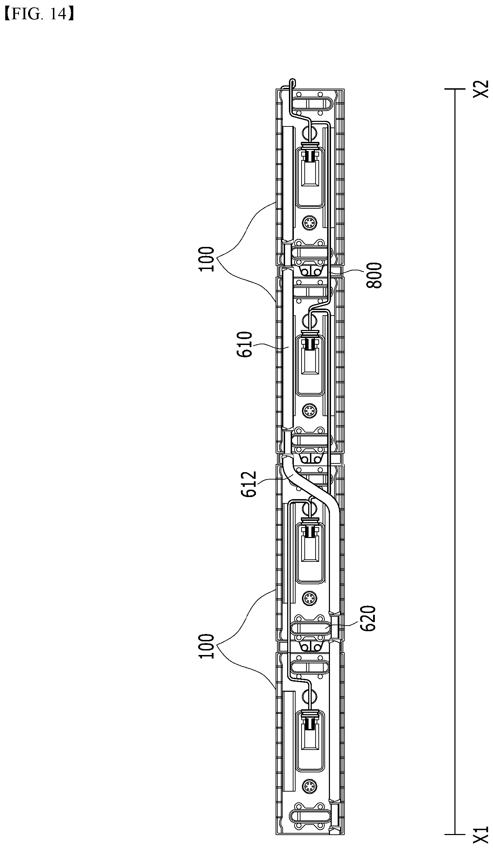

FIG. 11 is a perspective view showing the coupling between a battery module and a cooling assembly according to an embodiment of the present disclosure. FIG. 12 is a diagram showing a front surface or a rear surface of a battery module according to an embodiment of the present disclosure. FIGS. 13 and 14 are front views showing the coupling of the cooling assembly in the battery pack according to an embodiment of the present disclosure. FIG. 13 is a diagram viewed toward direction P in FIG. 9 in a state in which the first side frame 1130 is removed from FIG. 9, and FIG. 14 is a diagram viewed toward the Q direction of FIG. 9 in a state in which the second side frame 1140 is removed.

Referring to FIGS. 11 to 14, the battery pack 1000 of the present embodiment may include a cooling assembly 600 that supplies a coolant into the battery module 100.

The cooling assembly 600 may include a cooling pipe 610 for moving a coolant, and a cooling port 620 for entering and exiting the coolant. The cooling port 620 may be coupled with the cooling port opening 420 formed in the end plate 400, through which the coolant can be supplied from the cooling pipe 610 to the inside of the battery module 100. The coolant fed into the battery module 100 may cool the battery cell while being in direct contact with the battery cell. Therefore, the direct cooling method of the present embodiment can significantly improve the cooling efficiency compared to the conventional indirect cooling method by means of heat transfer members and cooling fins.

The cooling port 620 may have holes on both sides for coupling with the end plate 400, and the cooling port fastening member 760 is inserted into the hole, so that the cooling port 620 and the end plate 400 can be stably coupled. Wherein, in order to prevent leakage of the coolant around the cooling port 620, a sealing member such as an O-ring may be provided between the cooling port 620 and the end plate 400.

Wherein, the cooling ports 620 connected to each battery module 100 may all be connected to one cooling pipe 610, but this is not always the case, and as shown in FIGS. 13 and 14, some of the cooling ports 620 are connected to one cooling pipe 610, and other parts can be connected to another cooling pipe 610. By changing the connection structure of the cooling pipe 610 in this way, the flow of coolant can be changed, through which the cooling efficiency can be optimized.

Referring to FIGS. 9 and 11 to 14, in the battery pack 1000 according to the present embodiment, a plurality of cooling pipes 610 may be formed at an upper end or a lower end of the front surface and the rear surface of the battery module 100. Referring to FIGS. 13 and 14, in one battery module 100, if the first cooling pipe 610 arranged on the front surface of the battery module 100 adjacent to the first side frame 1130 of FIG. 9 is arranged at the lower end of the front surface of the battery module 100, the second cooling pipe 610 arranged at the rear surface of the battery module 100 adjacent to the second side frame 1140 of FIG. 9 may be arranged at the upper end of the rear surface of the battery module 100. Conversely, in one battery module 100, if the first cooling pipe 610 arranged on the front surface of the battery module 100 adjacent to the first side frame 1130 of FIG. 9 is arranged at the upper end of the front surface of the battery module 100, the second cooling pipe 610 arranged at the rear surface of the battery module 100 adjacent to the second side frame 1140 of FIG. 9 may be arranged at the lower end of the rear surface of the battery module 100. At this time, the coolant of the cooling pipe 610 arranged at the lower end of the front or rear surface of the battery module 100 corresponds to the case where it is supplied to the inside of the battery module 100 through the cooling port 620 connected to the cooling pipe 610. The coolant of the cooling pipe 610 arranged at the upper end of the front or rear surface of the battery module 100 corresponds to the case where the coolant inside the battery module 100 is supplied from the cooling port 620 connected to the cooling pipe 610. According to the present embodiment, the cooling pipe 610 functioning as an inlet for the coolant is arranged at the lower part of the battery module, and the cooling pipe 610 functioning as an outlet for the coolant can be arranged on the upper part of the battery module. At this time, the coolant is flowed into the battery module through the cooling port 620 connected to the cooling pipe 610 arranged at the lower part of the battery module, and the coolant is discharged to the outside of the battery module through the cooling port 620 connected to the cooling pipe 610 arranged at the upper part of the battery module, so that distribution of the insulating oil within the battery module 100 can be made even, which can maximize the cooling deviation between battery cells.

Referring to FIG. 14, a part of the cooling pipes 610 according to the present embodiment may be configured such that one end of the cooling pipe 610 is connected to a cooling port 620 at the upper end of the battery module, and the other end of the cooling pipe 610 may connected to the cooling port 620 at the lower end of a battery module adjacent to the battery module. At this time, the structure of the cooling pipe 610 may be a bent part 612 having a curved shape, which makes it possible to realize a configuration in which the cooling assemblies of adjacent battery modules are connected in series with each other.

In order to ensure that the cooling pipe 610 according to the present embodiment is mounted on the battery module 100, a locking part 650 may be formed on a front surface and a rear surface of the battery module 100. The locking part 650 may be formed on the front and rear surfaces of the battery module 100, respectively, and may be formed one by one at an upper end and a lower end of one surface of the battery module 100. The cooling pipe 610 is connected to the cooling port 620, and the cooling port 620 may be coupled to the end plate 400 by a cooling port fastening member 760. At this time, the locking part 650 may function as a structure that assists the cooling port fastening member 760 so that the cooling pipe 610 can be stably mounted on the battery module 100.

The locking part 650 may have a concave shape so as to engage with the outer shape of the cooling pipe 610. The cooling pipe 610 may be formed of a flexible material, and the radius of the mounting part of the locking part 650 on which the cooling pipe 610 is seated is formed to be smaller than the radius of the cooling pipe 610, so that the cooling pipe 610 may be fitted into the locking part 650. This is an example, and the radius of the mounting part of the locking part 650 does not necessarily need to be smaller than the radius of the cooling pipe 610. The locking part 650 may be formed to surround a portion of the outer surface of the cooling pipe 610.

Meanwhile, as shown in FIGS. 13 and 14, the LV cable 800 of the present embodiment may be provided for connection between battery modules 100. Therefore, as shown in FIGS. 13 and 14, the LV connection structure of the present embodiment may be made simpler than the conventional LV connection structure, thereby being able to improve the space efficiency.

The end plate 400 according to the present embodiment seals the open surface of the module housing 200, thereby being able to protect the cell assembly 120 and the electrical components connected thereto from external physical impacts. For this purpose, the end plate 400 may be made of a material having a predetermined strength. For example, the end plate 400 may include a metal such as aluminum.

The end plate 400 may be coupled to the module housing 200 while covering the busbar frame 130 located on one surface of the cell assembly 120. Each corner of the end plate 400 may be coupled to the corresponding corner of the module housing 200 by welding or the like.

Two end plates 400 may be provided so as to seal the two open surfaces of the module housing 200. Wherein, the end plate provided on the front surface of the module housing 200 and the end plate provided on the rear surface of the module housing 200 may have the same shape. This may be to simplify the process and minimize costs by manufacturing the two parts constituting the battery module 100 in the same form.

Further, the end plate 400 may have a shape that is vertically or horizontally symmetrical. Specifically, the end plate 400 may include a fracture opening 410, a cooling port opening 420, and a CMC opening 460, each of which may have a vertically symmetrical shape. Further, the end plate 400 may include two fracture openings 410, and the two fracture openings 410 may be located so as to be horizontally symmetrical with respect to the vertical bisector (or vertical center line). The end plate 400 may include two cooling port openings 420, and the two cooling port openings 420 may be located so as to be horizontally symmetrical with respect to the vertical bisector (or vertical center line) of the end plate 400.

In other words, the end plate 400 may have a symmetrical shape with respect to the first center line, wherein the first center line may be a line that vertically equally bisects the end plate 400. Further, the end plate 400 may have a symmetrical shape with respect to the second center line, wherein the second center line may be a line that horizontally equally bisects the end plate 400. At this time, the vertically and horizontally symmetrical shape is based on the overall shape, and components located on the outside, such as the mounting part 490, may be determined to be excluded.

The end plate 400 has a vertically or horizontally symmetrical structure as a whole in this way, whereby even if the battery module 100 is arranged upside down (i.e., the battery module is upside down), connection to an external device can be easily made, and effects such as process simplification or cost reduction and ease of design can be achieved.

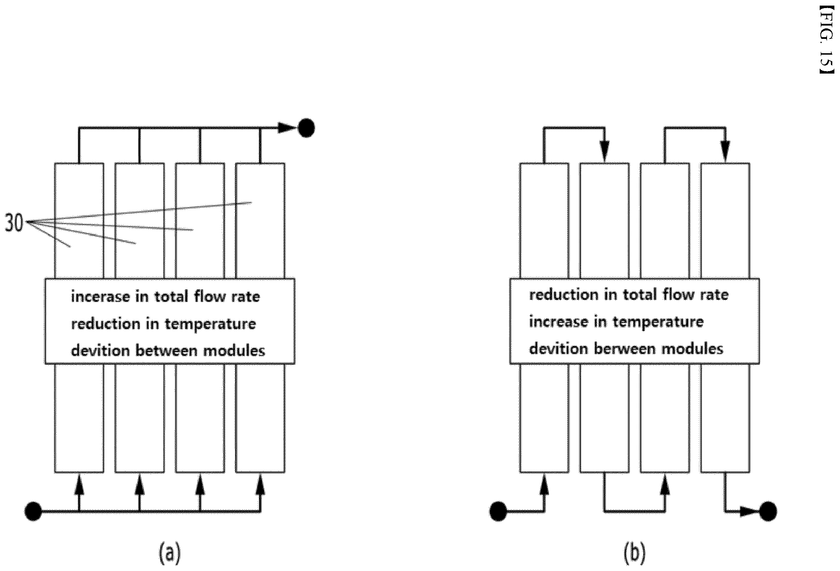

FIG. 15 is a schematic diagram showing the connecting relationship of the cooling assembly in the battery pack according to a comparative example. FIG. 16 is a schematic diagram showing the connecting relationship of the cooling assembly in the battery pack according to an embodiment of the present disclosure.

Referring to FIG. 15(a), in the coolant flow path in which the coolant passes through the inside of the plurality of battery modules 30, the cooling assemblies are connected in parallel so that a coolant inflow part and a coolant discharge part constituting the coolant flow path are arranged in parallel. In other words, the coolant flows into the plurality of battery modules 30 in a parallel structure, and the coolant that has passed through the plurality of battery modules 30 is discharged to the outside of the battery module in a parallel structure. On the other hand, referring to FIG. 15(b), in the coolant flow path in which the coolant passes through the inside of the plurality of battery modules 30, cooling assemblies are connected in series so that a coolant inflow part and a coolant discharge part constituting the coolant flow path are arranged in series. In other words, the coolant flows into the plurality of battery modules 30 in a series structure, and the coolant that has passed through the plurality of battery modules 30 is discharged to the outside of the battery module in a series structure.

In the battery pack according to FIG. 15(a), the total flow rate may increase, and the temperature difference between the plurality of battery modules may be reduced. In the battery pack according to FIG. 15(b), the total flow rate may decrease, and the temperature difference between the plurality of battery modules may increase.

Referring to FIG. 16, in the battery pack according to the present embodiment, in the coolant flow path in which the coolant passes through the inside of the plurality of battery modules 100, the coolant flow path is a flow path in which the plurality of battery modules 100 are connected in series. Specifically, in the coolant flow path, N battery modules (where N is a natural number of two or more) are connected in parallel, and in a state in which a plurality of module groups including the N battery modules connected in parallel are arranged, the module groups may have flow paths connected with each other in series.

Alternatively, each of the plurality of module groups includes an inflow part through which the coolant flows into the battery module 100 and a discharge part through which the coolant is discharged from the battery module 100, and the module groups may be arranged so that the inflow part and the discharge part of the module groups are alternately formed based on one side of the battery module 100.

As described above, according to the present embodiment, by configuring a series-parallel mixed coolant flow path, it is possible to form a coolant flow path having an optimal flow rate and temperature deviation.

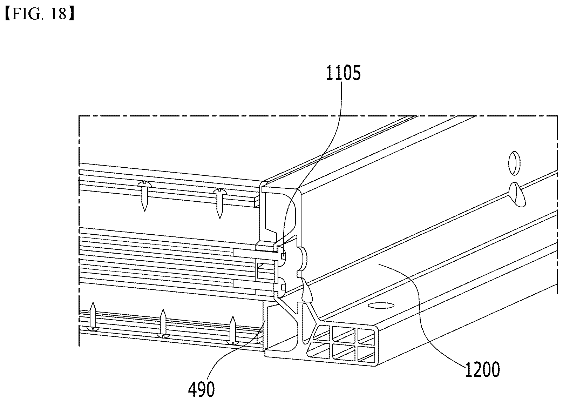

FIGS. 17 and 18 are diagrams showing the coupling of a battery module and a pack frame according to an embodiment of the present disclosure.

As shown in FIG. 10, a frame fastening part 230 may be formed on the side surface of the module housing to couple with the pack frame at the time of assembling the battery pack. The frame fastening part 230 may correspond to one of the holes formed in the mounting part 490 of the end plate as shown in FIG. 11, and may be fixed together to the pack frame at the time of coupling of the mounting part 490 and the pack frame.

Referring to FIGS. 9, 17 and 18, a mounting hole 900 is formed in a first side frame 1130 and a second side frame 1140, and the mounting hole 900 may be arranged so as to correspond to the hole formed in the mounting part 490 of the end plate 400. At this time, the frame fastening member 1105 may be inserted so as to pass through the hole formed in the mounting hole 900 and the mounting part 490, so that the battery module 100 and the first side frame 1130 or the second side frame 1140 can be coupled. In addition, the inserted frame fastening member 1105 can be inserted into the frame fastening part 230 of the module housing 200 shown in FIG. 10, thereby further improving the structural stability.

FIG. 19 is a plan view showing a structure in which terminal assemblies are connected in a battery pack according to an embodiment of the present disclosure.

Referring to FIG. 19, the plurality of terminal assemblies 300 can electrically connect adjacent battery modules across the P area and thereby connect the battery modules to an external power source or a BDU (Battery Disconnect Unit) 190, through which HV (high voltage) connection structure can be formed. The plurality of terminal assemblies may be located at a portion overlapping with a module extension part where the first sub-module and the second sub-module constituting one battery module face each other, and may extend in parallel to the direction in which the battery cells are stacked.

As described above, in the battery pack 1000 according to the present embodiment, connections between the plurality of battery modules 100 and between the battery modules 100 and the BDU 190 are formed via the terminal assembly 300 on the upper side of the module housing, so that the HV connection structure can be relatively simplified, and a margin for assembly tolerance can be secured.

A conventional battery pack includes a battery module, a cooling structure such as a heat transfer pad and a heat sink, and a pack housing, wherein the pack housing contains numerous metal platoon parts, including the pack cover, pack frame, crossbeam, and underguard. In contrast, the battery pack of the present disclosure has a direct cooling structure through the insulating oil circulation, has no separate cooling structure other than parts for sealing, and can connect highly stiff battery modules to form the battery pack, thereby minimizing a pack housing.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
120: cell assembly
130: busbar frame
200: module housing
200A: opening
210: cooling fin
220: bracket
300: terminal assembly
310: connecting cable
320: terminal housing
330: upper cap
350: fixing member
360: fastening member

## Claims

1. A battery module comprising:
a first sub-module and a second sub-module which each include a battery cell assembly in which a plurality of battery cells are stacked, and a busbar electrically connecting the battery cells and a busbar frame covering the battery cell assembly on at least one side,
a module housing that simultaneously houses the first sub-module and the second sub-module, and
a terminal assembly located at a portion overlapping with an area between the first sub-module and the second sub-module,
wherein an opening is formed in a part of the module housing, and the terminal assembly is connected to the terminal busbar of each of the first sub-module and the second sub-module through the opening.

2. The battery module according to claim 1, further comprising:
a bracket located in the opening, and
a sealing member formed between the bracket and the terminal assembly.

3. The battery module according to claim 2, wherein:
the terminal assembly comprises a connecting cable having flexible properties, a terminal housing coupled to the connecting cable, and an upper cap that covers the upper part of the terminal housing connected to the bracket.

4. The battery module according to claim 1, wherein:
the module housing is formed of a highly stiff material, and
the highly stiff material includes fiber reinforced plastic (FRP) as a composite material.

5. The battery module according to claim 1, further comprising:
a flange part formed on a side surface of the module housing, and
a module fastening member coupled to the flange part.

6. A battery pack comprising:
a plurality of the battery modules according to any one of claims 1 to 5,
wherein a first battery module and a second battery module included in the plurality of the battery modules are adjacent to each other,
wherein the first battery module and the second battery module are electrically connected by a first terminal assembly and a second terminal assembly, and
wherein the first terminal assembly and the second terminal assembly are connected to each other by a fixing member.

7. The battery pack according to claim 6, wherein:
the respective flange parts of the first battery module and the second battery module overlap each other, and the first battery module and the second battery module are coupled by a module fastening member that passes through the overlapping flange part.

8. The battery pack according to claim 7, wherein:
the coupling part including the module fastening member forms a stiff beam of the battery pack.

9. The battery pack according to claim 6, wherein:
the fixing member is fastened to the module housing by a fastening member.

10. The battery pack according to claim 6,
further comprising a pack frame that surrounds the plurality of battery modules from front, rear, left, and right sides, respectively, wherein the pack frame is divided into plural number so that the plurality of battery modules correspond to the front, rear, left, and right sides, respectively.

11. The battery pack according to claim 10,
further comprising a frame fastening part formed on a side surface of the module housing,
wherein at least one of the pack frames is connected to the battery module by inserting a frame fastening member into the frame fastening part.

12. The battery pack according to claim 11, wherein:
a mounting hole is formed in at least one of the pack frames,
the mounting hole is arranged so as to correspond to the hole formed in the mounting part of the end plate of the battery module, and
the frame fastening member is inserted into the mounting hole and the hole formed in the mounting part.

13. The battery pack according to claim 10, wherein:
the overall structure of the pack frame has a shape that exposes an upper part and a lower part of the battery module.

14. The battery pack according to claim 13, wherein:
the upper part and the lower part of the battery module formed of a highly stiff material form an upper cover and a lower cover of the pack frame.

15. The battery pack according to claim 6, wherein:
the first terminal assembly and the second terminal assembly connect terminal busbars having different polarities from each other, respectively.
